# EUROPEAN PATENT SPECIFICATION

(11) **EP 3 858 197 B1**
(45) Date of publication and mention of the grant of the patent: **24.08.2022**
(21) Application number: 20215389.6
(22) Date of filing: 18.12.2020
(51) Int. Cl.: A47C 11/00, A47C 7/02, A47C 1/032, B60N 2/22, B64D 11/06

(54) **VEHICLE SEAT WITH RECLINING SEATBACK**
FAHRZEUGSITZ MIT VERSTELLBARER RÜCKENLEHNE
SIÈGE DE VÉHICULE DOTÉ D'UN DOSSIER INCLINABLE

(30) Priority: 30.01.2020 IT 202000001798
(43) Date of publication of application: 04.08.2021
(73) Proprietor: Geven S.p.A., 80035 Nola (NA) (IT)
(72) Inventor: VENERUSO, Alberto, 80035 Nola (NA) (IT)
(74) Representative: Leone, Mario

(56) References cited:
- DE-A1- 2 605 952
- US-A1- 2016 331 137

## Description

The present invention relates to a seat with a reclining seatback, in particular apt to be used onboard vehicles such as aircrafts, trains or road vehicles, having, apart from the seatback, a fixed supporting frame and a seat assembly.

As it is known, especially in aeronautical field, the seats reserved to passengers have to comply, on one side, with strict safety regulations and, on the other side, with needs requiring a reduced weight, but in each case, they have to provide even a certain level of performances, in particular in terms of comfort.

This type of vehicle seat, intended to be occupied continuously for several hours, has to allow the passengers, compatibly with the space available in the rear area and in the front area of the seat itself, to stretch their own legs and to recline the back.

However, the lowering of the centre of gravity of the passenger's back could cause a shifting of their own weight which would burden the front end of the seat assembly, and this pressure could cause circulatory problems to the passenger, and however be a cause of discomfort.

The same stretching of the legs, alone, could cause this pressure and, in order to ease this positioning to the passenger, a lowering of the front end of the seat assembly could involve both the advantage of a greater pressure and that of increasing the space available to the passengers between their seat assembly and the seat which, in an arrangement by rows, is in front of it.

Besides, should the seatback tilting be accompanied by this lowering, the passenger would have the sensation of sliding downwards due to the failing of the resting support of the seat assembly, and this would cause a higher discomfort.

US 2016/0331137 A1 discloses many embodiments of seats, including vehicle seats, where the seat assembly, showing different shapes thereof, is rotated as a whole when the seatback is reclined. This arrangement could partially limit the discomfort caused by the seat reclining, but it may increase the pressure of the seat assembly front end on the legs, with more discomfort.

The document WO2016074723 discloses also a seat according to the relevant state of the art.

Then, it should be noted that alternative solutions available in different kind of seats, e.g. office seats or the like, cannot applied to a vehicle seat when such solutions are weight responsive in seats which are not tightly fastened to the vehicle floor. In a vehicle seat, where the position of the seatback must be positively determined and controlled when travelling, the reclining of the seatback cannot be weight responsive, and all the elements of the seat must be bound to their support structure.

The technical problem underlying the present invention is to provide a vehicle seat allowing to obviate the drawbacks mentioned with reference to the known art.

Such problem is solved by a vehicle seat as specified above and defined in appended claim 1, comprising:
- a reclining seatback with a seatback frame;
- a fixed supporting frame supporting the seatback frame; and
- a seat assembly defining a sitting surface, adjacent to the reclining seatback, a front end and a back end, the seat assembly being connected to the supporting frame at said front edge thereof by means of a first hinge, and the seat assembly being transversally divided into a front section and a rear section, said two sections being joined therebetween, separated by a second hinge defining a mutual rotation axis,
the reclining seatback being revolvingly connected to the supporting frame by means of side hinges defining a horizontal revolving axis placed upward the sitting surface, the seatback frame comprising side extension arms branching from said first side hinges and joining the seat assembly at the rear end thereof so that, when the seatback is reclined, the rear section of the seat assembly is pushed forwards and both said sections are mutually rotated lifting upward said mutual rotation axis from a flat configuration; provided that said horizontal revolving axis and said mutual rotation axis are parallel.

The main advantage of the vehicle seat according to the present invention lies in the fact of allowing, when the seatback is reclined, the formation of a cradle-shaped space between the seatback and the seat assembly, which provides the passenger a supporting sensation, whereas the front end of the seat assembly lowers thus by increasing the space to extend and straighten the legs, and the front section of the seat assembly provides a more comfortable support to the legs.

The present invention will be herein described according to a preferred embodiment example thereof in aeronautical field, i.e. an aircraft passenger seat, provided for exemplifying and not limiting purposes with reference to the enclosed drawings wherein:
* figure 1 shows an axonometric view of a vehicle seat structure of a vehicle seat according to the present invention, in particular an aircraft passenger seat;
* figure 2 shows an axonometric view of the vehicle seat structure of figure 1, wherein some portions were made transparent;
* figure 2A shows an enlarged view of a detail of the vehicle seat structure of figure 2;
* figure 3 shows a partial side view of the vehicle seat structure of figure 1, in particular corresponding to the seat assembly;
* figure 3A shows an enlarged view of a detail of the vehicle seat structure of figure 3;

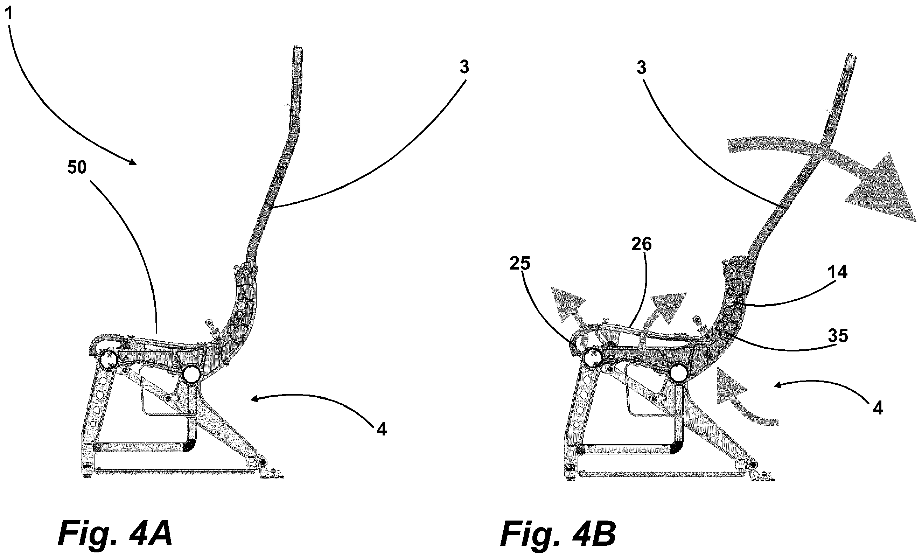

* figure 4A shows a side view of the whole vehicle seat structure of figure 1, in a position with the seatback in upright position;
* figure 4B shows a side view of the whole vehicle seat structure of figure 1, in a position with the seatback reclined; and
* figure 5 shows a side view of three rows of aircraft passenger seats, with a first seat, on the left in a position with the seatback in upright position; with a second seat, in the centre, of conventional type; and with a third seat, on the right, incorporating the vehicle seat structure of the preceding figures, in a position with the seatback reclined, illustrating the greater capability of extending the legs of a passenger schematically represented.

With reference to the figures, a vehicle seat structure is described, designated as a whole with 10, apt to implement an embodiment example of a vehicle seat 1 according to the present invention, which comprises a seat assembly 2 and a seatback 3, of reclining type.

The vehicle seat structure 10 comprises fixed supporting frame 4, which is a portion of a so-called primary structure for seats provided in rows, of the type which is fixed to the walkable floor of an aircraft, by means of specific attachments.

The reclining seatback 3 has a backrest surface contoured by a seatback frame 30 revolvingly hinged to said fixed supporting frame 4 by side hinges 34, which will be more detailed hereinafter.

The seat assembly 2 defines a sitting surface 50, adjacent to the reclining seatback, having a front end 51 and a back end 52. The seat assembly 2 is connected to said supporting frame 4 at said front end 51 thereof by means of a first hinge 24.

The seat assembly is transversally divided into two independent sections, namely a front section 25 and a rear section 26 forming said sitting surface 50 both in a flat configuration, where both sections are substantially coplanar, and in a rotated configuration.

Said two sections 25, 26 are joined together at their separation edge by a second hinge 27 defining a mutual rotation axis of the section, so that they can be mutually rotated lifting upward said mutual rotation axis from said flat configuration, so as to form a cradle-like space between the seatback 3 and the seat assembly 2.

The primary structure comprises in particular a first cross bar or beam 11, which is arranged substantially at a front edge of the seat assembly 2, and a second cross bar or beam 12, which is arranged substantially at a rear edge of the seat assembly 2, such cross bars 11, 12 being common to the whole raw of seats of a primary structure, arranged lifted by means of vertical uprights of the primary structure at a height requested by rules and by the design parameters of the seats.

The primary structure or frame 4 comprises a side element of frame 13 connecting laterally said cross bars 11, 12 at the side edges of each seat 1, which is then limited thereby. The side element of frame 13 extends above the second cross bar 12 in vertical direction, thus accompanying the profile of the seatback 3 which results to be included between two adjacent frame side elements 13.

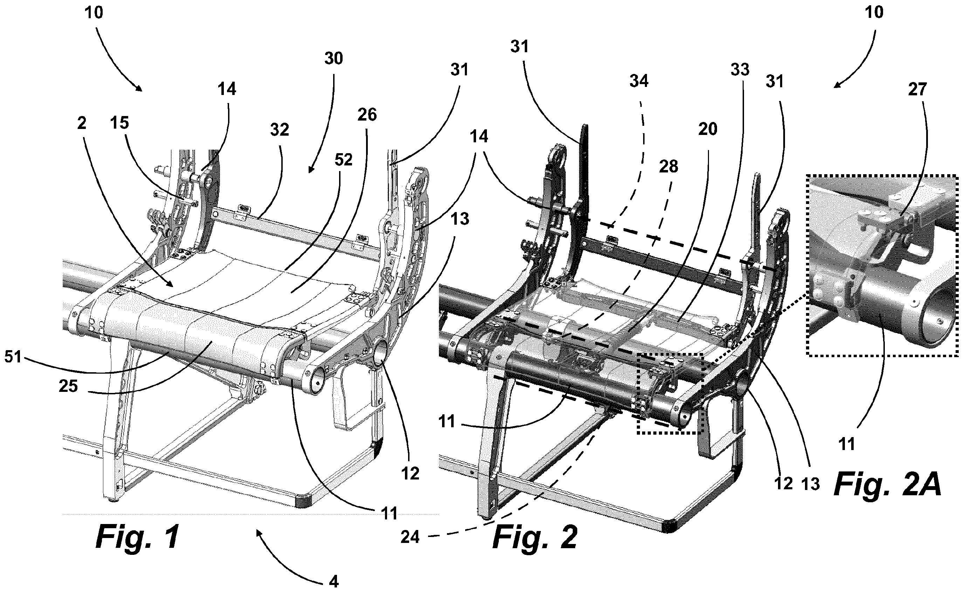

The seatback 3 comprises a reclining seatback frame 30, partially represented in figures 1 and 2, intended to include a coating and filling-in elements, not represented as of conventional type, to allow the support of a passenger's back. The seatback frame 30 then has quadrilateral-like shape, with two side bars 31 extending vertically at the side edges of the seatback 3, joined by at least an upper beam, not represented and arranged at the top of the seatback, and a pair of lower beams 32, 33.

The seatback frame 30 is revolvingly connected to the fixed support frame 4, i.e. to said side elements 13, by means of a pair of side hinges 14 connecting said side bars 31 to the respective frame side elements 13.

Said side hinges 14 define a horizontal revolving axis 34 which is placed upward the sitting surface 50, arranged at a certain distance above the seat assembly 2 of the vehicle seat 1, and above the first lower beam 32, the highest of the two beams, which provides a lower support to the vertical filling-in of the seatback 3.

Below said first hinge axis 34, the seatback frame 30 comprises a couple of lower extensions, each forming a respective side extension arm 35 branching from said first side hinges 14, constituted by the lower ends of said side bars 31, which are joined by the second lower beam 33 which, when the seatback 3 is reclined, moves forwards, in direction of the front end 51 of the seat assembly 2, by remaining below the level thereof.

In this arrangement, when the seatback 3 is reclined, the rear section 26 of the seat assembly 2 is pushed forwards by said side extension arms 35, and, considering that also the front section 51 is hinged to the fixed supporting frame 4, both said sections 25, 26 are mutually rotated.

The frame side elements 13, in proximity of said first hinge axis, have respective locking pins 15 which are intended to interfere with said side bars 31 at said side extension arms 35, to limit the rotation of the seatback frame 30, that is the angle thereby it can be reclined.

Generally, the reclining vehicle seats can be provided with a great variety of means to adjust the reclining angle, substantially all adaptable to the present vehicle seat. The present example of vehicle seat comprises an actuator 20, for example a hydraulic actuator, which is connected so as to extend longitudinally, i.e. from the back to the front, below and in the centre of the seat assembly, between two joined ends thereof, to said second lower beam 33, that is to an end of the side extension arm 35 of the seatback frame 30, and to the fixed support frame 4, to said first cross bar 11, to act thereon.

The actuator can be of any type, in particular of active type, or which controls the tilting of the seat, or passive type, which accompanies and limits the motion of the seatback by offering a resistance both to the reclination motion and to the one returning in erect position.

In the last case, by exerting a slight pressure on the projecting portion of the seatback, whereupon the passenger rests, in the suitable direction, for example indeed by increasing the pressure exerted by the back, the seatback 3 can be reclined as far as the stroke end, determined by the locking pins 15, whereas the spring 22 tends to bring the seatback 3 back to its upright position, thereat a mechanism can be provided for locking and releasing this function.

As already indicated above, the front end 50 of the seat assembly 2, in turn, is connected to the frame 4, that is to said first cross bar 11, by means of a joined connection which determines a first horizontal hinge axis, parallel to the horizontal revolving axis 34 of the seatback frame 30. The first horizontal axis is fixed, i.e. determined by the cross bar 11 of the fixed supporting frame 4.

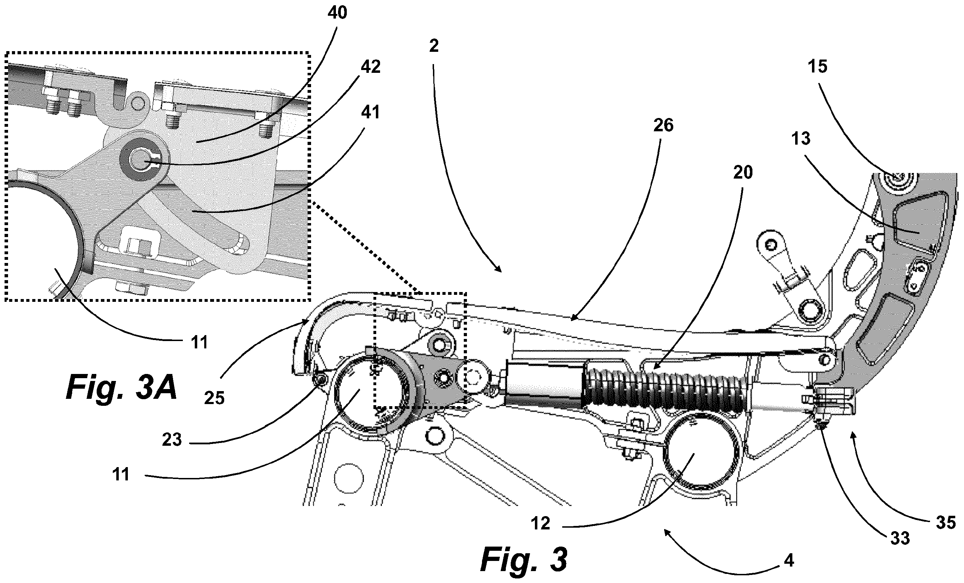

In the present example, such first hinge axis, designated with 24, is determined by a first hinge 23 arranged between the front edge of the seat assembly 2 and the front side of the first cross bar 11 of the frame 4 (figure 3).

Due to the effect of this arrangement, by reclining the seatback 3, that is by rotating it around the revolving axis 34 of the seatback frame 30, the side arms 35 of the seatback frame 3o, thereto the seat assembly 2 is connected, approaches to the first hinge axis 24.

As mentioned above, the seat assembly 2 is divided into a first front section 25 and a second rear section 26, which are joined together by a second hinge 27 which allow the two sections 25, 26 to rotate with respect to one another.

The two sections 25, 26, having each one a respective resting plane, intended to be conveniently provided with a common flexible coating, then have a mutual rotation axis 28 determined by said second hinge 27, which is parallel to said first hinge axis 24 and to said horizontal revolving axis 34 of the seatback frame 30.

In a simpler configuration, the mutual position of the two sections 25, 26 is so that the act of reclining the seatback 3 causes an upward lifting of the third hinge axis 28.

It is to be noted that the front section 25 has a longitudinal extension lower than a third, preferably than a fourth, of the overall longitudinal extension of the seat assembly 2. Consequently, the rear section 26 has a longitudinal extension larger than two thirds, preferably three quarters, of the overall longitudinal extension of the seat assembly 2, so as to provide an optimum resting surface for the seat assembly 2 of a passenger.

The backwards rotation of the rear section 26 makes that the angle between it and the seat 3 does not increase or in case decrease, due to the effect of the shape and extension of the organs which can guide actively such rotation, as detailed hereinafter, by giving the passenger the sensation of stable and more comfortable sitting.

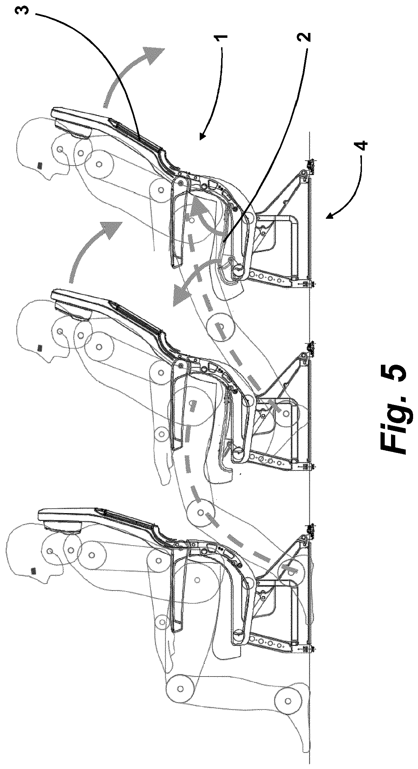

At the same time, the rotation upwards of the front section 25 of the seat assembly 2, increases the passenger's possibility to tilt downwards the leg upper tract, that is to stretch forward their own legs, in direction of the empty space below the seat in front of the passenger (see comparison in figure 5).

Means to guide the rotation of the sections of the seat assembly 2 can be provided. In the present example, the front edge of the rear section 26 is assembled on a pair of mobile supports 40, shaped like vertical walls and arranged below said rear section 26 near the side edges thereof.

Each mobile support 40 has a guiding tilted through-slot 41, with a bent profile, wherein a respective guiding pin 42 is inserted, integral to the frame 4, in particular to the first cross bar 11.

The shape of the slot 41 can be varied according to different needs, for example to further reduce the angle between the rear section 26 and the seatback 3, to compensate even more the effect of sliding forwards dictated by a position exchange of the passenger on the seat 1, and thus by determining a considerable decrease, if not a removal, of the cutting load acting on the passenger's thigh (figure 5).

The forward motion of the rear section 26, induced by the fact of reclining the seatback 3, moves forward even the mobile supports 40 which, through the sliding of the guiding pins 42 in the respective guiding slots, due to the effect of their tilting and curvature, receive a push upwards which favours the rotation of the two sections 25, 26 of the seat assembly 2 in the correct rotation direction.

To the described vehicle seat with reclining seatback, a person skilled in the art, with the purpose of satisfying additional and contingent needs, could introduce several additional modifications however all comprised within the protective scope of the present invention, as defined by the appended claims.

## Claims

1. A vehicle seat (1) comprising:
• a reclining seatback (3) with a seatback frame (30);
• a fixed supporting frame (4) supporting the seatback frame; and
• a seat assembly (2) defining a sitting surface, adjacent to the reclining seatback (3), a front end and a back end, the seat assembly (2) being connected to the supporting frame (4) at said front edge thereof by means of a first hinge (23) , and the seat assembly being transversally divided into a front section (25) and a rear section, said two sections (25, 26) being revolvingly joined by a second hinge (27) defining a mutual rotation axis (28),
the seatback frame (30) being revolvingly connected to the supporting frame (4) by means of side hinges (14) defining a horizontal revolving axis (34) placed upward the sitting surface (50), the seatback frame (30) comprising side extension arms (35) branching from said first side hinges (14) and joining the seat assembly (2) at the rear end thereof so that, when the seatback (3) is reclined, the rear section (26) of the seat assembly (2) is pushed forwards and both said sections (25, 26) are mutually rotated lifting upward said mutual rotation axis (28) from a flat configuration; provided that said horizontal revolving axis (34) and said mutual rotation axis (28) are parallel.

2. The vehicle seat (1) according to claim 1, wherein said fixed supporting frame (4)is a primary structure portion for seats provided in rows, which comprises a first cross bar (11), which is arranged substantially at a front edge of the seat assembly (2), a second cross bar or beam (12), which is arranged substantially at a rear edge of the seat assembly (2), and a plurality of frame side elements (13) connecting said cross bars (11, 12) at the side edges of each seat (1) which is then limited thereby, the frame side elements (13) extending above the second cross bar (12) in vertical direction, thus accompanying the profile of the seatback (3) which results to be included between two adjacent frame side elements (13).

3. The vehicle seat (1) according to claim 1, wherein said side extension arms (35) of the seatback (30) are connected to at least one lower beam (32, 33) connected to an actuator (20) longitudinally extending below the seat assembly (2), between two joined ends thereof, to said at least one lower beam (33) and to the fixed supporting frame (4).

4. The vehicle seat (1) according to claim 1 or 2, wherein said first hinge (23) define a respective hinge axis (24) is determined by joints (23) at the front end (51) of the seat assembly (2), parallel to both said horizontal revolving axis (34) and mutual rotation axis (28) .

5. The vehicle seat (1) according to claim 1, wherein the front section (25) has a longitudinal extension lower than a third, preferably than a fourth, of the overall longitudinal extension of the seat assembly (2), and consequently the rear section (26) has a longitudinal extension larger than two thirds, preferably three quarters, of the overall longitudinal extension of the seat assembly (2).

6. The vehicle seat (1) according to claim 1, wherein, when the seatback (3) is reclined, the rotation of the rear section (26) is so that the angle between it and the seat (3) does not increase, or preferably decreases.

7. The vehicle seat (1) according to claim 1, comprising guide means for guiding the rotation of the sections of the seat assembly (2).

8. The vehicle seat (1) according to claim 7, wherein the guide means comprises a pair of mobile supports (40), shaped like vertical walls and arranged below said rear section (26) near the side edges thereof, each mobile support (40) having a guiding tilted through-slot (41), with a bent profile, wherein a respective guiding pin (42) integral to the frame (4) is inserted.

## Patentansprüche

1. Fahrzeugsitz (1), aufweisend:
• eine neigbare Rückenlehne (3) mit einem Rückenlehnenrahmen (30);
• einen festen Stützrahmen (4), der den Rückenlehnenrahmen trägt; und
• eine Sitzanordnung (2), die, neben der neigbaren Rückenlehne (3), eine Sitzfläche mit einem Vorderende und einem Hinterende definiert, wobei die Sitzanordnung (2) mit dem Stützrahmen (4) an dessen Vorderkante verbunden ist mittels eines ersten Gelenks (23), und wobei die Sitzanordnung quer in einen vorderen Abschnitt (25) und einen hinteren Abschnitt unterteilt ist, wobei die zwei Abschnitte (25, 26) drehbar durch ein zweites Gelenk (27) verbunden sind, das eine gemeinsame Rotationsachse (28) definiert,
wobei der Rückenlehnenrahmen (30) drehbar mit dem Stützrahmen (4) mittels Seitengelenken (14) verbunden ist, die eine horizontale Drehachse (34) definieren, die oberhalb der Sitzfläche (50) angeordnet ist, wobei der Rückenlehnenrahmen (30) seitliche Verlängerungsarme (35) aufweist, die von den ersten Seitengelenken (14) abzweigen und die Sitzanordnung (2) an deren hinterem Ende verbinden, so dass, wenn die Rückenlehne (3) zurückgelehnt ist, der hintere Abschnitt (26) der Sitzanordnung (2 ) nach vorne geschoben wird und beide Abschnitte (25, 26) gemeinsam gedreht werden, aus einer flachen Konfiguration nach oben gehoben um die gemeinsame Drehachse (28); vorausgesetzt, dass die horizontale Drehachse (34) und die gemeinsame Drehachse (28) parallel sind.

2. Fahrzeugsitz (1) nach Anspruch 1, wobei der feste Stützrahmen (4) ein primärer Strukturabschnitt für in Reihen bereitgestellte Sitze ist, der eine erste Querstange (11) aufweist, die im Wesentlichen an einer Vorderkante der Sitzanordnung (2) angeordnet ist, eine zweite Querstange oder Träger (12), die/der im Wesentlichen an einer hinteren Kante der Sitzanordnung (2) angeordnet ist, und mehrere Rahmenseitenelemente (13), die die Querstangen (11, 12) an den Seitenkanten jedes dadurch dann begrenzten Sitzes (1) verbinden, wobei sich die Rahmenseitenelemente (13) in vertikaler Richtung oberhalb der zweiten Querstange (12) erstrecken und so das Profil der Rückenlehne (3) begleiten, das darin resultiert, zwischen zwei benachbarten Rahmenseitenelementen (13) eingeschlossen zu sein.

3. Fahrzeugsitz (1) nach Anspruch 1, wobei die seitlichen Verlängerungsarme (35) der Rückenlehne (30) mit mindestens einem unteren Träger (32, 33) verbunden sind, der mit einem Aktuator (20) verbunden ist, der sich längs unter der Sitzanordnung (2) erstreckt, zwischen zwei verbundenen Enden davon, zu dem mindestens einen unteren Träger (33) und zu dem feststehenden Stützrahmen (4).

4. Fahrzeugsitz (1) nach Anspruch 1 oder 2, wobei das erste Gelenk (23), das eine jeweilige Gelenkachse (24) definiert, durch Verbindungen (23) am vorderen Ende (51) der Sitzanordnung (2) bestimmt ist, parallel sowohl zu der horizontalen Drehachse (34) als auch der gemeinsamen Drehachse (28).

5. Fahrzeugsitz (1) nach Anspruch 1, wobei der vordere Abschnitt (25) eine Längserstreckung aufweist, die kleiner als ein Drittel, vorzugsweise als ein Viertel, der Gesamtlängserstreckung der Sitzanordnung (2) ist, und folglich der hintere Abschnitt (26) eine Längserstreckung hat, die größer als zwei Drittel, vorzugsweise drei Viertel der Gesamtlängserstreckung der Sitzanordnung (2) ist.

6. Fahrzeugsitz (1) nach Anspruch 1, wobei, wenn die Rückenlehne (3) geneigt ist, die Drehung des hinteren Abschnitts (26) so erfolgt, dass der Winkel zwischen ihm und dem Sitz (3) nicht zunimmt, oder vorzugsweise sinkt.

7. Fahrzeugsitz (1) nach Anspruch 1, aufweisend Führungsmittel zum Führen der Drehung der Abschnitte der Sitzanordnung (2).

8. Fahrzeugsitz (1) nach Anspruch 7, wobei die Führungsmittel ein Paar beweglicher Stützen (40) aufweisen, die wie vertikale Wände geformt und unterhalb des hinteren Abschnitts (26) nahe dessen Seitenkanten angeordnet sind, wobei jede bewegliche Stütze (40) einen Führungsschrägdurchgangsschlitz (41) aufweist, mit einem gebogenen Profil, in dem jeweils ein Führungsstift (42), der einstückig mit dem Rahmen (4) ist, eingesetzt ist.

## Revendications

1. Siège de véhicule (1) comprenant :
• un dossier (3) inclinable avec un cadre de dossier (30) ;
• un cadre (4) de support fixe supportant le cadre de dossier ; et
• un ensemble de siège (2) définissant une surface d'assise, adjacente au dossier (3) inclinable, une extrémité avant et une extrémité arrière, l'ensemble de siège (2) étant relié au cadre (4) de support au niveau dudit bord avant de celui-ci au moyen d'une première charnière (23), et l'ensemble de siège étant divisé transversalement en une section avant (25) et une section arrière, lesdites deux sections (25, 26) étant assemblées de manière pivotante par une seconde charnière (27) définissant un axe de rotation mutuel (28),
le cadre de dossier (30) étant relié de manière pivotante au cadre (4) de support au moyen de charnières latérales (14) définissant un axe de pivotement horizontal (34) placé vers le haut de la surface d'assise (50), le cadre de dossier (30) comprenant des bras d'extension latéraux (35) partant desdites premières charnières latérales (14) et assemblant l'ensemble de siège (2) à l'extrémité arrière de celui-ci de façon à ce que, lorsque le dossier (3) est incliné, la section arrière (26) de l'ensemble de siège (2) soit poussée en avant et lesdites sections (25, 26) soient toutes les deux mutuellement tournées en élevant vers le haut ledit axe de rotation mutuel (28) à partir d'une configuration plane ; à condition que ledit axe de pivotement horizontal (34) et ledit axe de rotation mutuel (28) soient parallèles.

2. Siège de véhicule (1) selon la revendication 1, dans lequel ledit cadre (4) de support fixe est une partie de structure principale pour des sièges fournis en rangées, qui comprend une première barre transversale (11), qui est agencée sensiblement au niveau d'un bord avant de l'ensemble de siège (2), une seconde barre transversale ou une poutre (12), qui sont agencées sensiblement au niveau d'un bord arrière de l'ensemble de siège (2), et une pluralité d'éléments latéraux de cadre (13) reliant lesdites barres transversales (11, 12) au niveau des bords latéraux de chaque siège (1) qui est alors limité par ceux-ci, les éléments latéraux de cadre (13) s'étendant au-dessus de la seconde barre transversale (12) dans une direction verticale, suivant ainsi le profil du dossier (3) ce qui a pour résultat qu'il soit compris entre deux éléments latéraux de cadre (13) adjacents.

3. Siège de véhicule (1) selon la revendication 1, dans lequel lesdits bras d'extension latéraux (35) du dossier (30) sont reliés à au moins une poutre inférieure (32, 33) reliée à un actionneur (20) s'étendant longitudinalement en dessous de l'ensemble de siège (2), entre deux extrémités assemblées de celui-ci, jusqu'à ladite au moins une poutre inférieure (33) et jusqu'au cadre (4) de support fixe.

4. Siège de véhicule (1) selon la revendication 1 ou 2, dans lequel ladite première charnière (23) définit un axe de charnière (24) respectif est déterminé par des articulations (23) à l'extrémité avant (51) de l'ensemble de siège (2), parallèle à la fois audit axe de pivotement horizontal (34) et audit axe de rotation mutuel (28).

5. Siège de véhicule (1) selon la revendication 1, dans lequel la section avant (25) a une extension longitudinale inférieure à un tiers, de préférence à un quart, de l'extension longitudinale totale de l'ensemble de siège (2), et par conséquent la section arrière (26) a une extension longitudinale plus grande que deux tiers, de préférence trois quarts, de l'extension longitudinale totale de l'ensemble de siège (2).

6. Siège de véhicule (1) selon la revendication 1, dans lequel, lorsque le dossier (3) est incliné, la rotation de la section arrière (26) est telle que l'angle entre elle et le siège (3) n'augmente pas, ou de préférence diminue.

7. Siège de véhicule (1) selon la revendication 1, comprenant un moyen guide pour guider la rotation des sections de l'ensemble de siège (2).

8. Siège de véhicule (1) selon la revendication 7, dans lequel le moyen guide comprend une paire de supports mobiles (40), formés comme des parois verticales et agencés en dessous de ladite section arrière (26) près des bords latéraux de celle-ci, chaque support mobile (40) ayant une fente traversante inclinée de guidage (41), avec un profil courbé, où une tige de guidage (42) respective faisant partie intégrante du cadre (4) est insérée.
